# EUROPEAN PATENT APPLICATION

(11) **EP 4 518 406 A1**
(43) Date of publication of application: **05.03.2025**
(21) Application number: 22947666.8
(22) Date of filing: 14.10.2022
(51) Int. Cl.: H04W 24/04

(54) **SERVICE TRANSMISSION METHOD AND COMMUNICATION APPARATUS**

(30) Priority: 23.06.2022 CN 202210718247; 30.08.2022 CN 202211049439
(71) Applicant: Huawei Technologies Co., Ltd., Shenzhen, Guangdong 518129 (CN)
(72) Inventor: DU, Xiaole, Shenzhen, Guangdong 518129 (CN); RUAN, Wei, Shenzhen, Guangdong 518129 (CN); TIAN, Yonggang, Shenzhen, Guangdong 518129 (CN); YUE, Huawei, Shenzhen, Guangdong 518129 (CN); MA, Jiankun, Shenzhen, Guangdong 518129 (CN)
(74) Representative: Thun, Clemens
(86) International application number: PCT/CN2022/125410
(87) International publication number: WO 2023/245929

(57) **Abstract**

This application provides a service transmission method and a communication apparatus. The method includes: A first access point sends a radio frame to a second access point, where the radio frame indicates a service synchronously transmitted by the first access point and the second access point; and the first access point initiates the service. According to the foregoing technical solution, in this application, service synchronization between the first access point and the second access point can be implemented. Correspondingly, the first access point and the second access point may orderly initiate the service, so that network congestion and stalling can be alleviated.

## Description

This application claims priorities to Chinese Patent Application No. 202210718247.1, filed with the China National Intellectual Property Administration on June 23, 2022 and entitled " SERVICE SYNCHRONIZATION METHOD AND COMMUNICATION APPARATUS", and to Chinese Patent Application No. 202211049439.4, filed with the China National Intellectual Property Administration on August 30, 2022 and entitled "SERVICE TRANSMISSION METHOD AND COMMUNICATION APPARATUS", both of which are incorporated herein by reference in their entireties.

### TECHNICAL FIELD

This application relates to the field of Wi-Fi technologies, and more specifically, to a service transmission method and a communication apparatus.

### BACKGROUND

In daily life, a plurality of access points are deployed in places such as a home, a company, an airport, and a shopping mall, and each access point needs to perform service transmission. For example, the access point broadcasts/multicasts a low-speed packet, and the access point sends data to a station.

Both the access point and the station need to contend for a channel to obtain a transmission opportunity (transmission opportunity, TXOP). A larger quantity of access points indicates a more congested air interface. This is prone to network congestion and stalling. Because the access points basically operate independently and contend for channels independently, network congestion and stalling may be further aggravated.

### SUMMARY

This application provides a service transmission method and a communication apparatus, to implement service synchronization between access points, so that network congestion and stalling can be alleviated.

According to a first aspect, a service transmission method is provided. The method includes: A first access point sends a radio frame to a second access point, where the radio frame indicates a service synchronously transmitted by the first access point and the second access point. The first access point initiates the service.

Specifically, before initiating the service, the first access point may send, to the second access point, the radio frame that includes information indicating the service that needs to be synchronized between the first access point and the second access point. In this way, service synchronization can be implemented between the first access point and the second access point. Correspondingly, the first access point and the second access point may orderly initiate the service, so that network congestion and stalling can be alleviated.

Optionally, the radio frame may be a trigger frame, or another radio frame whose function is similar to that of the trigger frame.

It should be understood that, that the first access point and the second access point synchronize the service may also be understood as that the first access point indicates the second access point to initiate the service.

According to the foregoing technical solution, in this application, service synchronization between the first access point and the second access point can be implemented. In this way, network congestion and stalling can be alleviated.

With reference to the first aspect, in some implementations of the first aspect, the first information includes type information of the service and feature information of the service.

The type information of the service that needs to be synchronized between the first access point and the second access point and the feature information of the service are carried in the first information, so that the second access point can better complete service synchronization with the first access point.

With reference to the first aspect, in some implementations of the first aspect, the radio frame includes a common information field, and the common information field indicates the service.

Specifically, the radio frame may be a trigger frame. In this application, the service may be indicated by using a common information field (common information field) of the trigger frame. In this way, an unused bit of the trigger frame can be fully used.

With reference to the first aspect, in some implementations of the first aspect, the common information field includes a trigger type subfield and a trigger depend common information subfield. The trigger type subfield is used to carry the type information. The trigger depend common information subfield is used to carry the feature information.

The trigger type subfield may be a trigger type. The trigger depend common information subfield may be trigger depend common information.

Specifically, the trigger type subfield includes four bits. In this application, a service type is indicated by using a combination of other unused bits in the trigger type subfield. In this way, compatibility with a structure of an existing trigger frame can be implemented without changing the structure of the trigger frame. A bit length of the trigger depend common information subfield is variable, and the feature information of the service may be carried by increasing the bit length of the trigger depend common information subfield. In this way, compatibility with a structure of an existing trigger frame can be implemented without changing the structure of the trigger frame.

With reference to the first aspect, in some implementations of the first aspect, the radio frame includes a user information field, and the user information field indicates the service.

Specifically, the radio frame may be a trigger frame. In this application, the service may be indicated by using a user information field (user information field) of the trigger frame. In this way, an unused bit of the trigger frame can be fully used.

With reference to the first aspect, in some implementations of the first aspect, the user information field includes an application identifier subfield. The application identifier subfield is used to carry the type information, and at least one subfield other than the application identifier subfield in the user information field is used to carry the feature information.

The application identifier subfield may be an AID.

Specifically, the AID subfield includes 12 bits. In this application, a service type is indicated by using a combination of other unused bits in the AID subfield. In this way, compatibility with a structure of an existing trigger frame can be implemented without changing the structure of the trigger frame. In addition, content of a subfield other than the AID subfield in the user information field may be reconstructed to specifically indicate the feature information of the service. In this way, compatibility with a structure of an existing trigger frame can be implemented without changing the structure of the trigger frame.

With reference to the first aspect, in some implementations of the first aspect, the service includes at least one of the following: sending of a beacon frame or synchronization of a timestamp.

Specifically, synchronization is maintained between the first access point and the second access point in terms of the service of sending a beacon frame, so that a station can receive, within a specific time period, same beacon frames sent by different access points, and the station does not roam proactively. Synchronization is maintained between the first access point and the second access point in terms of the service of synchronizing a timestamp, so that the first access point and the second access point can separately perform service scheduling within an agreed time period. In this way, the first access point and the second access point do not perform service scheduling at the same time, so that network congestion and stalling can be alleviated.

With reference to the first aspect, in some implementations of the first aspect, the feature information includes at least one of the following: timestamp information, sequence number information of an 802.11 protocol radio frame, or scrambling code information.

One or more pieces of the foregoing information are provided, so that an action of the second access point can be changed, to implement service collaboration between the first access point and the second access point.

With reference to the first aspect, in some implementations of the first aspect, the service is the sending of a beacon frame, and that the first access point initiates the service includes: The first access point sends the beacon frame to a station, where a time interval between a sending moment of the beacon frame and a sending moment of a radio frame is a first time period.

The two APs separately send a same beacon frame to the STA within a specific time period (for example, within 0.8 microseconds), so that power of two beacon frames received by the STA can coincide. Therefore, the STA can obtain one beacon frame by parsing, so that power of the STA does not fluctuate, and the STA does not roam proactively.

With reference to the first aspect, in some implementations of the first aspect, the first time period is less than or equal to 16 microseconds.

According to a second aspect, a service transmission method is provided. The method includes: A second access point receives a radio frame sent by a first access point, where the radio frame indicates a service synchronously transmitted by the first access point and the second access point. The second access point initiates the service based on the radio frame.

With reference to the second aspect, in some implementations of the second aspect, the radio frame includes type information of the service and feature information of the service.

With reference to the second aspect, in some implementations of the second aspect, the radio frame includes a common information field, and the common information field indicates the service.

With reference to the second aspect, in some implementations of the second aspect, the common information field includes a trigger type and trigger depend common information. The trigger type is used to carry the type information. The trigger depend common information is used to carry the feature information.

With reference to the second aspect, in some implementations of the second aspect, the radio frame includes a user information field, and the user information field indicates the service.

With reference to the second aspect, in some implementations of the second aspect, the user information field includes an application identifier. The application identifier is used to carry the type information, and a part other than the application identifier in the user information field is used to carry the feature information.

With reference to the second aspect, in some implementations of the second aspect, the service includes at least one of the following: sending of a beacon frame or synchronization of a timestamp.

With reference to the second aspect, in some implementations of the second aspect, the feature information includes at least one of the following: timestamp information, sequence number information, or scrambling code information.

With reference to the second aspect, in some implementations of the second aspect, the service is the sending of a beacon frame, and that the second access point initiates the service based on the radio frame includes: The second access point sends the beacon frame to a station, where a time interval between a sending moment of the beacon frame and a receiving moment of the radio frame is a second time period.

With reference to the second aspect, in some implementations of the second aspect, the second time period is less than or equal to 16 microseconds.

According to a third aspect, a communication apparatus is provided, including a transceiver unit, configured to send a radio frame to a second access point, where the radio frame indicates a service synchronously transmitted by a first access point and the second access point. The transceiver unit is configured to initiate the service.

With reference to the third aspect, in some implementations of the third aspect, the radio frame includes type information of the service and feature information of the service.

With reference to the third aspect, in some implementations of the third aspect, the radio frame includes a common information field, and the common information field indicates the service.

With reference to the third aspect, in some implementations of the third aspect, the common information field includes a trigger type subfield and a trigger depend common information subfield. The trigger type subfield is used to carry the type information. The trigger depend common information subfield is used to carry the feature information.

With reference to the third aspect, in some implementations of the third aspect, the radio frame includes a user information field, and the user information field indicates the service.

With reference to the third aspect, in some implementations of the third aspect, the user information field includes an application identifier subfield. The application identifier subfield is used to carry the type information, and at least one subfield other than the application identifier subfield in the user information field is used to carry the feature information.

With reference to the third aspect, in some implementations of the third aspect, the service includes at least one of the following: sending of a beacon frame or synchronization of a timestamp.

With reference to the third aspect, in some implementations of the third aspect, the feature information includes at least one of the following: timestamp information, sequence number information of an 802.11 protocol radio frame, or scrambling code information.

With reference to the third aspect, in some implementations of the third aspect, the service is the sending of a beacon frame. The transceiver unit is further configured to send the beacon frame to a station, where a time interval between a sending moment of the beacon frame and a sending moment of the radio frame is a first time period.

With reference to the third aspect, in some implementations of the third aspect, the first time period is less than or equal to 16 microseconds.

According to a fourth aspect, a communication apparatus is provided, including a transceiver unit, configured to receive a radio frame sent by a first access point, where the radio frame indicates a service synchronously transmitted by the first access point and the communication apparatus. The transceiver unit is further configured to initiate the service based on the radio frame.

With reference to the fourth aspect, in some implementations of the fourth aspect, the radio frame includes type information of the service and feature information of the service.

With reference to the fourth aspect, in some implementations of the fourth aspect, the radio frame includes a common information field, and the common information field indicates the service.

With reference to the fourth aspect, in some implementations of the fourth aspect, the common information field includes a trigger type subfield and a trigger depend common information subfield. The trigger type subfield is used to carry the type information. The trigger depend common information subfield is used to carry the feature information.

With reference to the fourth aspect, in some implementations of the fourth aspect, the radio frame includes a user information field, and the user information field indicates the service.

With reference to the fourth aspect, in some implementations of the fourth aspect, the user information field includes an application identifier subfield. The application identifier subfield is used to carry the type information, and at least one subfield other than the application identifier subfield in the user information field is used to carry the feature information.

With reference to the fourth aspect, in some implementations of the fourth aspect, the service includes at least one of the following: sending of a beacon frame or synchronization of a timestamp.

With reference to the fourth aspect, in some implementations of the fourth aspect, the feature information includes at least one of the following: timestamp information, sequence number information of an 802.11 protocol radio frame, or scrambling code information.

With reference to the fourth aspect, in some implementations of the fourth aspect, the service is the sending of a beacon frame. The transceiver unit is further configured to send the beacon frame to a station, where a time interval between a sending moment of the beacon frame and a receiving moment of the radio frame is a second time period.

With reference to the fourth aspect, in some implementations of the fourth aspect, the second time period is less than or equal to 16 microseconds.

According to a fifth aspect, a service transmission method is provided. The method includes: An access point sends a trigger frame, where the trigger frame indicates a type of a synchronization service and private information corresponding to the synchronization service.

With reference to the fifth aspect, in some implementations of the fifth aspect, the trigger frame includes a trigger type field, the trigger type field indicates the type of the synchronization service, and a tail of the trigger frame includes the private information.

With reference to the fifth aspect, in some implementations of the fifth aspect, a user information field of the trigger frame includes an AID, and the AID indicates the type of the synchronization service and the private information.

With reference to the fifth aspect, in some implementations of the fifth aspect, the method further includes: sending a beacon frame.

According to a sixth aspect, a service transmission method is provided. The method includes: An access point receives a trigger frame, where the trigger frame indicates a type of a synchronization service and private information corresponding to the synchronization service.

With reference to the sixth aspect, in some implementations of the sixth aspect, the trigger frame includes a trigger type field, the trigger type field indicates the type of the synchronization service, and a tail of the trigger frame includes the private information.

With reference to the sixth aspect, in some implementations of the sixth aspect, a user information field of the trigger frame includes an AID, and the AID indicates the type of the synchronization service and the private information.

With reference to the sixth aspect, in some implementations of the sixth aspect, the method further includes: sending a beacon frame.

According to a seventh aspect, a communication apparatus is provided, including a sending unit, configured to send a trigger frame, where the trigger frame indicates a type of a synchronization service and private information corresponding to the synchronization service.

With reference to the seventh aspect, in some implementations of the seventh aspect, the trigger frame includes a trigger type field, the trigger type field indicates the type of the synchronization service, and a tail of the trigger frame includes the private information.

With reference to the seventh aspect, in some implementations of the seventh aspect, a user information field of the trigger frame includes an AID, and the AID indicates the type of the synchronization service and the private information.

With reference to the seventh aspect, in some implementations of the seventh aspect, the sending unit is further configured to send a beacon frame.

According to an eighth aspect, a communication apparatus is provided, including a receiving unit, configured to receive a trigger frame, where the trigger frame indicates a type of a synchronization service and private information corresponding to the synchronization service, and.

With reference to the eighth aspect, in some implementations of the eighth aspect, the trigger frame includes a trigger type field, the trigger type field indicates the type of the synchronization service, and a tail of the trigger frame includes the private information.

With reference to the eighth aspect, in some implementations of the eighth aspect, a user information field of the trigger frame includes an AID, and the AID indicates the type of the synchronization service and the private information.

With reference to the eighth aspect, in some implementations of the eighth aspect, the sending unit is further configured to send a beacon frame.

According to a ninth aspect, a communication system is provided, including a first access point and a second access point. The first access point is configured to perform the method according to any one of the first aspect and the possible implementations of the first aspect. The second access point is configured to perform the method according to any one of the second aspect and the possible implementations of the second aspect.

According to a tenth aspect, a computer-readable storage medium is provided, including a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eleventh aspect, a computer program product is provided, including instructions. When the instructions are run on a computer, the method according to any one of the first aspect and the possible implementations of the first aspect is performed, or the method according to any one of the second aspect and the possible implementations of the second aspect is performed.

### BRIEF DESCRIPTION OF DRAWINGS

FIG. 1 is a diagram of an application scenario 100 according to an embodiment of this application;
FIG. 2 is an interaction flowchart of an existing uplink service scheduling method 200;
FIG. 3 is a diagram of existing uplink service scheduling;
FIG. 4 is an interaction flowchart of a service transmission method 400 according to an embodiment of this application;
FIG. 5 is a diagram of a structure of a trigger frame #500 according to an embodiment of this application;
FIG. 6 is a diagram of a structure of a trigger frame #600 according to an embodiment of this application;
FIG. 7 is an interaction flowchart of a service transmission method 700 according to an embodiment of this application;
FIG. 8 is a block diagram of a communication apparatus 800 according to an embodiment of this application;
FIG. 9 is a block diagram of a communication apparatus 900 according to an embodiment of this application; and
FIG. 10 is a block diagram of a communication apparatus 1000 according to an embodiment of this application.

### DESCRIPTION OF EMBODIMENTS

The following describes technical solutions of this application with reference to accompanying drawings.

The technical solutions in embodiments of this application are applicable to a wireless local area network (wireless local area network, WLAN) scenario. For example, the technical solutions in embodiments of this application are applicable to an IEEE 802.11 system standard, for example, the 802.11a/b/g standard, the 802.11n standard, the 802.11ac standard, the 802.11ax standard, or a next-generation standard, for example, the 802.11be standard or a further next-generation standard.

Although embodiments of this application are mainly described by using an example in which a WLAN network is deployed, especially a network to which the IEEE 802.11 system standard is applied, a person skilled in the art easily understands that various aspects in embodiments of this application may be extended to other networks that use various standards or protocols, for example, Bluetooth (Bluetooth), a high performance radio local area network (high performance radio local area network, HIPERLAN), a wide area network (wide area network, WAN), a personal area network (personal area network, PAN), and other networks that are known or developed in the future. Therefore, regardless of used coverage and a used wireless access protocol, various aspects in embodiments of this application are applicable to any suitable wireless network.

The technical solutions of embodiments of this application may be further applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, a wireless local area network system like an IoT network or a vehicle-to-everything (vehicle to x, V2X) system, or the like.

It should be understood that the foregoing communication systems applicable to this application are merely examples for description, and the communication systems applicable to this application are not limited thereto. This is uniformly described herein, and details are not described below again.

A terminal in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session Initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future 6G network, a terminal in a public land mobile network (public land mobile network, PLMN), or the like. This is not limited in embodiments of this application.

A network device in embodiments of this application may be a device configured to communicate with the terminal. The network device may be a base transceiver station (base transceiver station, BTS) in a global system for mobile communications (global system of mobile communications, GSM) system or a code division multiple access (code division multiple access, CDMA) system; may be a NodeB (NodeB, NB) in a wideband code division multiple access (wideband code division multiple access, WCDMA) system; may be an evolved NodeB (evolutional nodeB, eNB or eNodeB) in an LTE system; or may be a radio controller in a cloud radio access network (cloud radio access network, CRAN) scenario. Alternatively, the network device may be a relay station, an access point, a vehicle-mounted device, a wearable device, a network device in a 5G network, a network device in a future 6G network, a network device in a PLMN network, or the like. This is not limited in embodiments of this application.

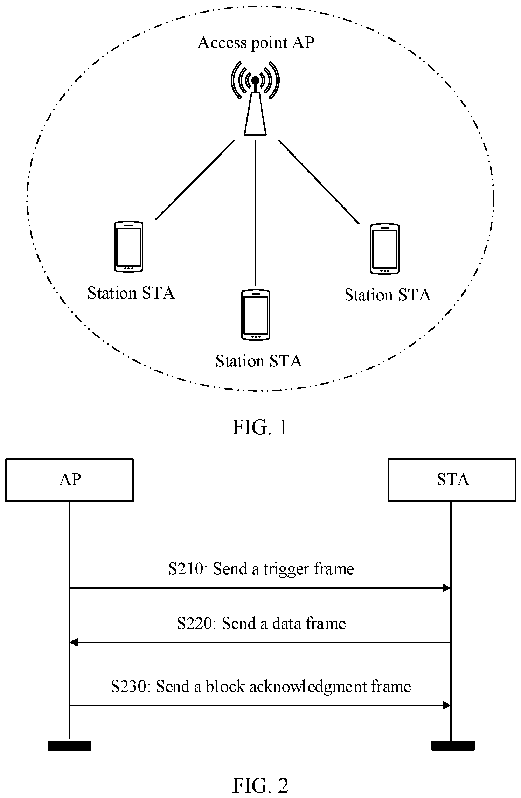

FIG. 1 is a diagram of an application scenario 100 according to an embodiment of this application. As shown in FIG. 1, an access point (access point, AP) may be a communication server, a router, or a switch, or may be any one of the foregoing network devices. A station (station, STA) may be a mobile phone or a computer, or may be any one of the foregoing terminals. This is not limited in embodiments of this application.

It should be understood that, the technical solutions in embodiments of this application are applicable to communication between an AP and one or more STAs, are also applicable to mutual communication between APs, and are further applicable to mutual communication between STAs. For ease of description, embodiments of this application are described merely by using an example in which an AP communicates with one or more STAs. However, this description manner does not have any limitation on an actual application scope of embodiments of this application. This is uniformly described herein, and details are not described below again.

The access point may be an access point used by a terminal (for example, a mobile phone) to access a wired (or wireless) network, and is mainly deployed at home, in a building, and in a campus. A typical coverage radius is tens of meters or 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet.

Specifically, the access point may be a terminal (such as a mobile phone) or a network device (such as a router) with a Wi-Fi chip. The access point may be a device that supports the 802.11be standard. Alternatively, the access point may be a device that supports a plurality of WLAN standards of the 802.11 family, such as 802.11ax, 802.11ac, 802.11n, 802.11g, 802.11b, 802.11a, and a next generation of 802.11be. The access point in this application may be an HE AP or an EHT AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication device, or a computer that supports a Wi-Fi communication function.

Optionally, the station may support the 802.11be standard. Alternatively, the station may support WLAN standards of the 802.11 family, such as 802.11ax, 802.11ac, 802.11n, 802.11g, 802.11b, 802.11a, and the next generation of 802.11be.

For example, the access point and the station may be devices used in vehicle-to-everything, internet of things nodes or sensors in the Internet of things (Internet of things, IoT), smart cameras, smart remote controls, and smart water or electricity meters in a smart home, and sensors in a smart city.

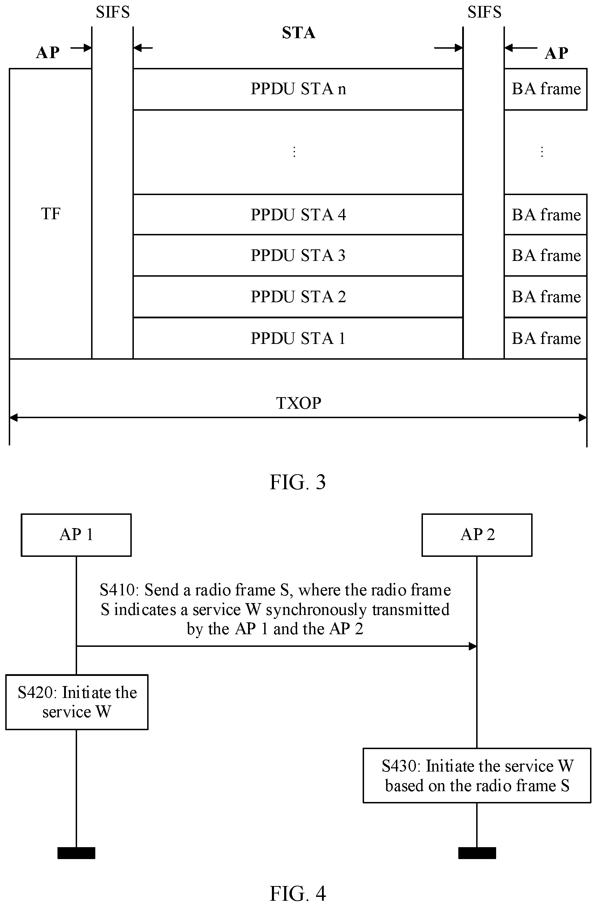

The following describes an existing uplink service scheduling procedure with reference to FIG. 2 and FIG. 3.

FIG. 2 is an interaction flowchart of an existing uplink service scheduling method 200. As shown in FIG. 2, the uplink service scheduling method 200 includes the following steps.

S210: An AP sends a trigger frame to a STA.

Correspondingly, the STA receives the trigger frame (trigger frame, TF) from the AP, and determines, based on the TF, to upload data to the AP.

It may be understood that the TF sent by the AP to the STA is used to trigger the STA to upload the data to the AP. The TF is further used to trigger the STA to upload the data to the AP through orthogonal frequency division multiple access (orthogonal frequency division multiple access, OFDMA).

S220: The STA sends a data frame to the AP.

Correspondingly, the AP receives the data frame from the STA. For example, the data frame may be a protocol data unit (presentation protocol data unit, PPDU).

It may be understood that the STA determines, based on the TF delivered by the AP, to upload the data to the AP, for example, send the PPDU through the OFDMA.

S230: The AP sends a block acknowledgment frame to the STA.

Correspondingly, the STA receives the block acknowledgment (block acknowledgment, BA) frame from the AP.

It may be understood that, after receiving the data uploaded by the STA, the AP sends the corresponding BA frame to the STA, to confirm that the AP has received the data uploaded by the STA.

In the foregoing technical solution, the AP may broadcast the TF to a plurality of STAs, to schedule the plurality of STAs to upload data to the AP. For details, refer to FIG. 3.

FIG. 3 is a diagram of existing uplink service scheduling. As shown in FIG. 3, the AP broadcasts the TF to the plurality of STAs. After a short inter-frame space (short inter-frame space, SIFS), the AP receives PPDUs uploaded by the plurality of STAs. Correspondingly, the AP sends a plurality of corresponding BA frames to the plurality of STAs after the SIFS.

It should be understood that, in a TXOP obtained by the AP, the AP delivers the TF to the plurality of STAs and receives the plurality of PPDUs uploaded by the plurality of STAs.

It can be learned from the foregoing that the AP delivers the TF to the STAs, so that service synchronization between the plurality of STAs can be implemented. The AP sends the TF, so that the AP can communicate with the plurality of STAs at the same time. However, because service synchronization cannot be performed between APs, the plurality of APs may simultaneously perform uplink service scheduling, and consequently, network congestion and stalling may be caused.

In view of the foregoing technical problem, this application provides a service synchronization method and a communication apparatus, to implement service synchronization between access points, thereby alleviating network congestion and stalling.

The following describes the service transmission method and the communication apparatus in embodiments of this application with reference to the accompanying drawings.

FIG. 4 is an interaction flowchart of a service transmission method 400 according to an embodiment of this application. The method procedure in FIG. 4 may be performed by a STA/an AP, or may be performed by a module and/or a component (for example, a chip or an integrated circuit) that are/is installed in the STA/AP and that have/has a corresponding function. This is not limited in embodiments of this application. The following uses the STA/AP as an example for description. As shown in FIG. 4, the service transmission method 400 includes the following steps.

S410: An AP 1 sends a radio frame S to an AP 2, where the radio frame S indicates a service W synchronously transmitted by the AP 1 and the AP 2.

Correspondingly, the AP 2 receives the radio frame S sent by the AP 1, and determines, based on the radio frame S, the service W that needs to be synchronously transmitted with the AP 1.

In a possible implementation, the radio frame includes service information, and the service information indicates the service.

In a possible implementation, the radio frame S includes a TF, or may include another radio frame whose function is similar to that of the trigger frame. This is not limited in embodiments of this application. For ease of description, in this embodiment of this application, an example in which the radio frame S is a TF is used for description.

Specifically, the AP 1 sends the TF to the AP 2, to indicate, to the AP 2, information about the service W that needs to be synchronously transmitted by the AP 1 and the AP 2. For example, the service W may include sending of a beacon frame, synchronization of a timestamp, and the like.

It should be understood that, that the first access point and the second access point synchronously transmit the service W may also be understood as that the first access point indicates the second access point to initiate the service W.

In a possible implementation, the radio frame S may include type information of the service and feature information of the service.

Specifically, the type information of the service indicates a type of the service that needs to be synchronously transmitted by the AP 1 and the AP 2, for example, the sending of a beacon frame and the synchronization of a timestamp. The feature information of the service indicates a feature of the service. For example, the feature information of the service may include timestamp (timestamp) information, sequence number (sequence number) information of an 802.11 protocol radio frame, scrambling code (scrambling code) information, and the like. One or more pieces of the foregoing information are provided, so that an action of the AP 2 can be changed, to implement service collaboration between the AP 1 and the AP 2.

In a possible implementation, the TF includes a common information field (common information field), and the common information field indicates the service.

For example, the common information field includes a trigger type (trigger type) subfield and a trigger depend common information (trigger depend common information) subfield. The trigger type subfield is specifically used to carry the type information of the service, and the trigger depend common information subfield is used to carry the feature information of the service. For details, refer to Table 1.

**Table 1**

| Bit combination | Service type |
|---|---|
| 1000 | Service A |
| 1001 | Service B |
| 1010 | Service C |
| 1011 | Service D |
| 1100 | Service E |
| 1101 | Service F |
| 1110 | Service G |
| 1111 | Service H |

In Table 1, the trigger type subfield includes 4 bits, and the several bit combinations described in Table 1 may be used to respectively indicate different services. For example, the bit combination 1000 indicates the service A, the bit combination 1001 indicates the service B, the bit combination 1010 indicates the service C, the bit combination 1011 indicates the service D, the bit combination 1100 indicates the service E, the bit combination 1101 indicates the service F, the bit combination 1110 indicates the service G, and the bit combination 1111 indicates the service H.

It may be understood that the service A to the service G are merely used as examples for understanding, and service types specifically indicated by the service A to the service G are not limited in embodiments of this application. For example, the service A may indicate the sending of a beacon (beacon) frame, and the service B may indicate the synchronization of a timestamp.

Specifically, synchronization is maintained between the first access point and the second access point in terms of the service of sending a beacon frame, so that a station can receive, within a specific time period, same beacon frames sent by different access points, and the station does not roam proactively. Synchronization is maintained between the first access point and the second access point in terms of the service of synchronizing a timestamp, so that the first access point and the second access point can separately perform service scheduling within an agreed time period. In this way, the first access point and the second access point do not perform service scheduling at the same time, so that network congestion and stalling can be alleviated.

In addition, the trigger depend common information subfield includes a plurality of bits (a specific bit length is not limited). Therefore, the feature information of the service may be carried in the trigger depend common information subfield. For details, refer to Table 2.

**Table 2**

| Bit combination | Service type | Feature information |
|---|---|---|
| 1000 | Service A | Feature information A |
| 1001 | Service B | Feature information B |
| 1010 | Service C | Feature information C |
| 1011 | Service D | Feature information D |
| 1100 | Service E | Feature information E |
| 1101 | Service F | Feature information F |
| 1110 | Service G | Feature information G |
| 1111 | Service H | Feature information H |

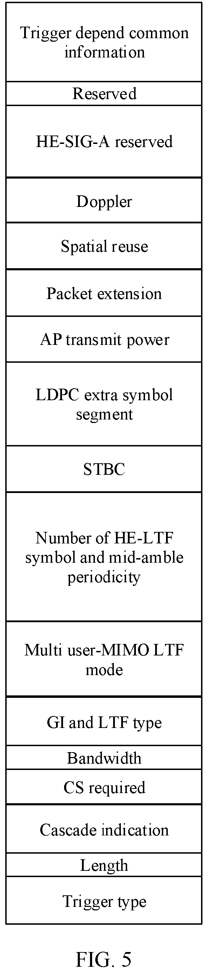

In Table 2, the feature information A indicates a feature of the service A, and is carried in the trigger depend common information subfield, and the service A is carried in the trigger type subfield. The feature information B indicates a feature of the service A, and is carried in the trigger depend common information subfield, and the service B is carried in the trigger type subfield. The feature information C indicates a feature of the service C, and is carried in the trigger depend common information subfield, and the service C is carried in the trigger type subfield. The feature information D indicates a feature of the service D, and is carried in the trigger depend common information subfield, and the service D is carried in the trigger type subfield. The feature information E indicates a feature of the service E, and is carried in the trigger depend common information subfield, and the service E is carried in the trigger type subfield. The feature information F indicates a feature of the service F, and is carried in the trigger depend common information subfield, and the service F is carried in the trigger type subfield. The feature information G indicates a feature of the service G, and is carried in the trigger depend common information subfield, and the service G is carried in the trigger type subfield. The feature information H indicates a feature of the service H, and is carried in the trigger depend common information subfield, and the service H is carried in the trigger type subfield. For a specific structure, refer to FIG. 5.

In a possible implementation, the TF includes a user information field (user information field), and the user information field indicates the service.

For example, the user information field includes an application identifier (application identifier, AID) subfield. The AID subfield is used to carry the type information of the service, and a subfield other than the AID subfield in the user information field is used to carry the feature information of the service. For details, refer to Table 3.

**Table 3**

| Bit combination | Service type |
|---|---|
| 100000000000 | Service A |
| 100000000001 | Service B |
| 100000000010 | Service C |
| ... | |
| 111111111111 | Service * |

In Table 3, the AID subfield includes 12 bits, and the several bit combinations described in Table 2 may be used to respectively indicate different services. For example, the bit combination 100000000000 indicates the service A, the bit combination 100000000001 indicates the service B, the bit combination 100000000010 indicates the service C, and the bit combination 111111111111 indicates the service *.

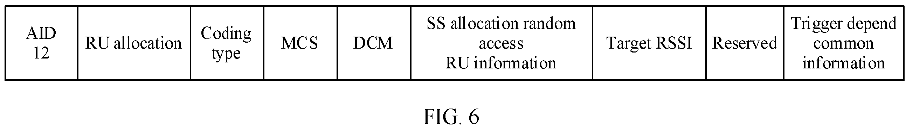

In addition, the subfield other than the AID subfield in the user information field may be used to carry the feature information of the service. For details, refer to FIG. 6.

S420: The AP 1 initiates the service W.

Specifically, the AP 1 initiates the service W after the AP 1 sends the radio frame S to the AP 2. In this way, the AP 1 and the AP 2 can perform service linkage.

S430: The AP 2 initiates the service W based on the radio frame S.

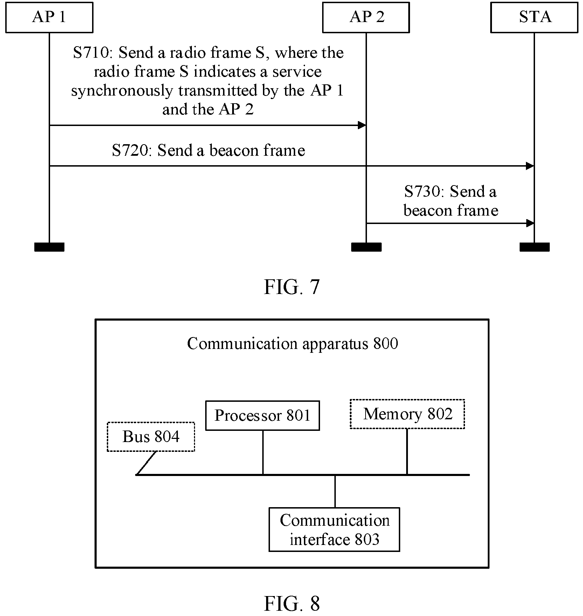

Specifically, after receiving the radio frame S sent by the AP 1, the AP 2 may initiate the service W based on the radio frame S. For specific content, refer to FIG. 7. Details are not described herein.

Specifically, before initiating the service, the AP 1 may send, to the AP 2, the radio frame that includes information indicating the service that needs to be synchronously transmitted by the AP 1 and the AP 2. In this way, service synchronization can be implemented between the AP 1 and the AP 2. Correspondingly, the AP 1 and the AP 2 may orderly initiate the service, so that network congestion and stalling can be alleviated.

Optionally, the radio frame may be a trigger frame.

According to the foregoing technical solution, in this application, service synchronization between access points can be implemented. In this way, network congestion and stalling can be alleviated.

The following describes an example of a structure of the radio frame S in this embodiment of this application with reference to FIG. 5 and FIG. 6.

FIG. 5 is a diagram of a structure of a trigger frame #500 according to an embodiment of this application. As shown in FIG. 5, the trigger frame #500 includes the following plurality of pieces of content:
a trigger type subfield, a length (length) subfield, a cascade indication (cascade indication) subfield, a carrier sense required (carrier sense required, CS Required) subfield, a bandwidth (bandwidth, BW) subfield, a guard interval (guard interval, GI) and long training field (long training field, LTF) type (GI and LTF type) subfield, a multi user-multiple input multiple output LTF mode (multi user-multiple input multiple output LTF mode, Mu-MIMO LTF mode) subfield, a number of high efficiency LTF symbol and mid-amble periodicity (number of HE-LTF symbol and mid-amble periodicity) subfield, a space time block coding (space time block coding, STBC) subfield, a low density parity-check code (low density parity-check code, LDPC) extra symbol segment (LDPC Extra Symbol Segment) subfield, an AP transmit power (AP TX Power) subfield, a packet extension (Packet Extension) subfield, a spatial reuse (spatial reuse) subfield, a Doppler (Doppler) subfield, a high efficiency signal field A (high efficiency signal field A, HE-SIG-A) reserved (HE-SIG-A reserved) subfield, a reserved (reserved) subfield, a trigger depend common information subfield, and the like.

The trigger type subfield includes 4 bits, the length subfield includes 12 bits, the cascade indication subfield includes 1 bit, the CS required subfield includes 1 bit, the BW subfield includes 2 bits, the GI and LTF type subfield includes 2 bits, the Mu-MIMO LTF mode subfield includes 1 bit, the number of HE-LTF symbol and mid-amble periodicity subfield includes 3 bits, the STBC subfield includes 1 bit, the LDPC extra symbol segment subfield includes 1 bit, the AP TX power subfield includes 6 bits, the packet extension subfield includes 3 bits, the spatial reuse subfield includes 16 bits, the Doppler subfield includes 1 bit, the HE-SIG-A reserved subfield includes 9 bits, the reserved subfield includes 1 bit, and a quantity of bits of the trigger depend common information subfield is variable.

The trigger frame #500 may be the radio frame S. The type information of the service and the feature information of the service may be carried in the trigger type subfield and the trigger depend common information subfield respectively. For specific content, refer to the foregoing descriptions. Details are not described herein again.

It may be understood that the structure of the trigger frame #500 shown in FIG. 5 may be only a partial structure, for example, the common information field (common information field).

FIG. 6 is a diagram of a structure of a trigger frame #600 according to an embodiment of this application. As shown in FIG. 6, the trigger frame #600 includes the following plurality of pieces of content:
an AID12 subfield, a resource unit allocation (resource unit allocation, RU Allocation) subfield, a coding type (coding type) subfield, a modulation coding scheme (modulation coding scheme, MCS) subfield, a dual carrier modulation (dual carrier modulation, DCM) subfield, a search space allocation random access RU information (search space allocation random access RU information, SS Allocation Random Access RU Information) subfield, a target received signal strength indicator (target received signal strength indicator, Target RSSI) subfield, a reserved (reserved) subfield, a trigger depend common information subfield, and the like.

The AID12 subfield includes 12 bits, the RU allocation subfield includes 8 bits, the coding type subfield includes 1 bit, the MCS subfield includes 4 bits, the DCM subfield includes 1 bit, the SS allocation random access RU information subfield includes 6 bits, the target RSSI subfield includes 7 bits, the reserved subfield includes 1 bit, and a quantity of bits of the trigger depend common information subfield is variable.

The trigger frame #600 may be the radio frame S. The type information of the service and the feature information of the service may be carried in the AID subfield and a subsequent subfield. For specific content, refer to the foregoing descriptions. Details are not described herein again.

It may be understood that the structure of the trigger frame #600 shown in FIG. 6 may be only a partial structure, for example, the user information field (user information field).

The following further describes the service transmission method 400 shown in FIG. 4 with reference to FIG. 7.

FIG. 7 is an interaction flowchart of a service synchronization method 700 according to an embodiment of this application. The method procedure in FIG. 7 may be performed by a STA/an AP, or may be performed by a module and/or a component (for example, a chip or an integrated circuit) that are/is installed in the STA/AP and that have/has a corresponding function. This is not limited in embodiments of this application. The following uses the STA/AP as an example for description. As shown in FIG. 7, the service synchronization method 700 includes the following steps.

S710: An AP 1 sends a radio frame S to an AP 2, where the radio frame S indicates a service W synchronously transmitted by the AP 1 and the AP 2.

Correspondingly, the AP 2 receives the radio frame S sent by the AP 1, and determines, based on the radio frame S, the service W that needs to be synchronized with the AP 1.

Optionally, the service W may include sending of a beacon frame. For ease of description, in this embodiment of this application, an example in which the service W is the sending of a beacon frame is used for description.

For specific descriptions, refer to S410. Details are not described herein again.

S720: The AP 1 sends a beacon frame to the STA.

Correspondingly, the STA receives the beacon frame from the AP 1.

It should be understood that the AP 1 may send the beacon frame to the STA within a first time period after sending the radio frame S to the AP 2. The first time period may be less than or equal to 16 microseconds or the like.

S730: The AP 2 sends a beacon frame to the STA.

Correspondingly, the STA receives the beacon frame sent by the AP 2.

It should be understood that the AP 2 may send the beacon frame to the STA within a second time period after receiving the radio frame S sent by the AP 1. The second time period is less than or equal to 16 microseconds or the like.

Optionally, the first time period is equal to the second time period.

It should be further understood that the beacon frame sent by the AP 1 to the STA and the beacon frame sent by the AP 2 to the STA are two same beacon frames. In addition, a time interval between a moment at which the STA receives the beacon frame sent by the AP 1 and a moment at which the STA receives the beacon frame sent by the AP 2 may be less than or equal to 0.8 microseconds. In this way, the STA may consider that the beacon frame sent by the AP 1 and the beacon frame sent by the AP 2 are a same beacon frame.

The two APs separately send a same beacon frame to the STA within a specific time period (for example, within 0.8 microseconds), so that power of two beacon frames received by the STA can coincide. Therefore, the STA can obtain one beacon frame by parsing, so that power of the STA does not fluctuate, and the STA does not roam proactively.

The foregoing describes the method embodiments in embodiments of this application, and the following describes corresponding apparatus embodiments.

FIG. 8 is a diagram of a communication apparatus 800 according to an embodiment of this application. The communication apparatus 800 includes a processor 801 and a communication interface 803. Optionally, the communication apparatus 800 may further include a memory 802 and a bus 804. The processor 801, the memory 802, and the communication interface 803 are connected to each other through the bus 804.

It should be understood that the communication apparatus 800 shown in FIG. 8 may be an access point, or may be a station.

The memory 802 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store related instructions and data.

The processor 801 may be one or more central processing units (central processing unit, CPU). When the processor 801 is one CPU, the CPU may be a single-core CPU or a multi-core CPU.

When the communication apparatus 800 is an AP 1, the processor 801 is configured to read program code stored in the memory 802, to perform the following operations:
sending a radio frame S to an AP 2 through the communication interface, where the radio frame S indicates a service W synchronously transmitted by the AP 1 and the AP 2; and
initiating the service W through the communication interface.

For specific content, refer to the descriptions in the foregoing method embodiments. Details are not described herein again.

When the communication apparatus 800 is an AP 2, the processor 801 is configured to read program code stored in the memory 802, to perform the following operations:
receiving a radio frame S through the communication interface, where the radio frame S indicates a service W synchronously transmitted by the AP 1 and the AP 2; and
initiating the service W through the communication interface.

For specific content, refer to the descriptions in the foregoing method embodiments. Details are not described herein again.

When the communication apparatus 800 is a STA, the processor 801 is configured to read program code stored in the memory 802, to perform the following operation:
receiving a beacon frame through the communication interface.

In addition, for implementation of the operations in FIG. 8, refer to corresponding descriptions in the method embodiment shown in FIG. 4 or FIG. 7.

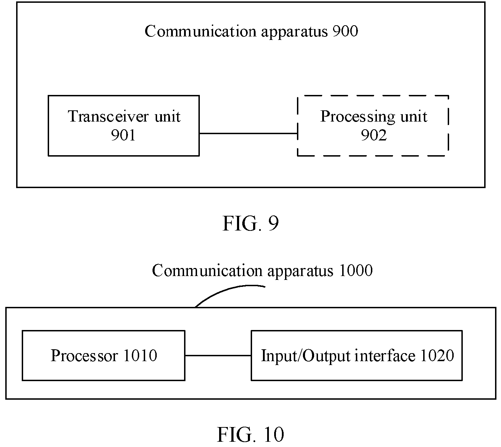

FIG. 9 is a diagram of a communication apparatus 900 according to an embodiment of this application. The communication apparatus 900 is used in an access point, or may be used in a station, and may be configured to implement the foregoing method embodiments. The communication apparatus 900 includes a transceiver unit 901. The following describes the transceiver unit 901.

When the communication apparatus 900 is an AP 1, the transceiver unit 901 is configured to send a radio frame S to an AP 2, where the radio frame S indicates a service W synchronously transmitted by the AP 1 and the AP 2. The transceiver unit 901 is further configured to initiate the service W.

Optionally, the communication apparatus 900 may further include a processing unit 902. The processing unit 902 is configured to perform actions such as decision-making and determining in the foregoing method embodiments.

When the communication apparatus 900 is an AP 2, the transceiver unit 901 is configured to receive a radio frame S sent by an AP 1, where the radio frame S indicates a service W synchronously transmitted by the AP 1 and the AP 2. The transceiver unit 901 is further configured to initiate the service W.

Optionally, the communication apparatus 900 may further include a processing unit 902. The processing unit 902 is configured to perform actions such as decision-making and determining in the foregoing method embodiments.

In addition, for implementation of the operations in FIG. 9, refer to corresponding descriptions of the methods shown in the foregoing embodiments. Details are not described herein again.

FIG. 10 is a diagram of a communication apparatus 1000 according to an embodiment of this application. The communication apparatus 1000 may be configured to implement the AP 1, the AP 2, or the STA in the foregoing method. The communication apparatus 1000 may be a communication apparatus or a chip in a communication apparatus.

The communication apparatus 1000 includes an input/output interface 1020 and a processor 1010. The input/output interface 1020 may be an input/output circuit. The processor 1010 may be a signal processor, a chip, or another integrated circuit that can implement the method in this application. The input/output interface 1020 is configured to input or output a signal or data.

For example, when the communication apparatus 1000 is the AP 1, the input/output interface 1020 is configured to send a radio frame S to the AP 2, and is configured to send a beacon frame to the STA. When the communication apparatus 1000 is the AP 2, the input/output interface 1020 is configured to receive a radio frame S sent by the AP 1, send a beacon frame to the STA. The processor 1010 is configured to perform some or all steps of any method provided in embodiments of this application.

For example, when the communication apparatus 1000 is the AP 1, the processor 1010 is configured to perform the steps performed by the AP 1 in the possible implementations in the foregoing method embodiments. When the communication apparatus 1000 is the AP 2, the processor 1010 is configured to perform the steps performed by the AP 2 in the possible implementations in the foregoing method embodiments.

In a possible implementation, the processor 1010 executes the instructions stored in the memory, to implement a function implemented by the AP 1, the STA, or the AP 2.

Optionally, the communication apparatus 1000 further includes a memory.

Optionally, the processor and the memory are integrated together.

Optionally, the memory is outside the communication apparatus 1000.

In a possible implementation, the processor 1010 may be a logic circuit, and the processor 1010 inputs/outputs a message or signaling through the input/output interface 1020. The logic circuit may be a signal processor, a chip, or another integrated circuit that can implement the method in embodiments of this application.

The foregoing description of the apparatus in FIG. 10 is merely an example for description. The apparatus can be configured to perform the methods in the foregoing embodiments. For specific content, refer to the description in the foregoing method embodiments. Details are not described herein again.

An embodiment of this application further provides a chip, including a processor, configured to invoke, from a memory, instructions stored in the memory and run the instructions, to enable a communication device on which the chip is mounted to perform the method in the foregoing examples.

An embodiment of this application further provides another chip, including an input interface, an output interface, a processor, and a memory. The input interface, the output interface, the processor, and the memory are connected by using an internal connection path. The processor is configured to execute code in the memory. When the code is executed, the processor is configured to perform the methods in the foregoing examples.

An embodiment of this application further provides a processor, configured to be coupled to a memory, and configured to perform a method and a function that are related to a satellite or user equipment in any one of the foregoing embodiments.

In another embodiment of this application, a computer program product is provided. When the computer program product runs on a computer, the method in the foregoing embodiment is implemented.

In another embodiment of this application, a computer-readable storage medium is provided. The computer-readable storage medium stores a computer program. When the computer program is executed by a computer, the method in the foregoing embodiment is implemented.

In the descriptions of embodiments of this application, the term "a plurality of" means two or more than two unless otherwise specified. In addition, "at least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description.

Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

It should be understood that "one embodiment" or "an embodiment" mentioned throughout this specification means that specific characteristics, structures, or features related to the embodiments are included in at least one embodiment of the present invention.

Therefore, "in one embodiment" or "in an embodiment" that appears throughout the specification does not necessarily mean a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined according to functions and internal logic of the processes, and should not be construed as any limitation on the implementation processes of embodiments of the present invention.

It may be understood that an "embodiment" used throughout this specification means that particular features, structures, or characteristics related to this embodiment are included in at least one embodiment of this application.

Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments. In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service transmission method, comprising:
sending, by a first access point, a radio frame to a second access point, wherein the radio frame indicates a service synchronously transmitted by the first access point and the second access point; and
initiating, by the first access point, the service.

2. The method according to claim 1, wherein the radio frame comprises type information of the service and feature information of the service.

3. The method according to claim 1 or 2, wherein the radio frame comprises a common information field, and the common information field indicates the service.

4. The method according to claim 3, wherein the common information field comprises a trigger type subfield and a trigger depend common information subfield;
the trigger type subfield is used to carry the type information; and
the trigger depend common information subfield is used to carry the feature information.

5. The method according to claim 1 or 2, wherein the radio frame comprises a user information field, and the user information field indicates the service.

6. The method according to claim 5, wherein the user information field comprises an application identifier subfield;
the application identifier subfield is used to carry the type information; and
at least one subfield other than the application identifier subfield in the user information field is used to carry the feature information.

7. The method according to any one of claims 1 to 6, wherein the service comprises at least one of the following:
sending of a beacon frame or synchronization of a timestamp.

8. The method according to any one of claims 2 to 7, wherein the feature information comprises at least one of the following:
timestamp information, sequence number information of an 802.11 protocol radio frame, or scrambling code information.

9. The method according to any one of claims 1 to 8, wherein the service is the sending of a beacon frame, and the initiating, by the first access point, the service comprises:
sending, by the first access point, the beacon frame to a station, wherein
a time interval between a sending moment of the beacon frame and a sending moment of the radio frame is a first time period.

10. The method according to claim 8, wherein the first time period is less than or equal to 16 microseconds.

11. A service transmission method, comprising:
receiving, by a second access point, a radio frame sent by a first access point, wherein the radio frame indicates a service synchronously transmitted by the first access point and the second access point; and
initiating, by the second access point, the service based on the radio frame.

12. The method according to claim 11, wherein the radio frame comprises type information of the service and feature information of the service.

13. The method according to claim 11 or 12, wherein the radio frame comprises a common information field, and the common information field indicates the service.

14. The method according to claim 13, wherein the common information field comprises a trigger type subfield and a trigger depend common information subfield;
the trigger type subfield is used to carry the type information; and
the trigger depend common information subfield is used to carry the feature information.

15. The method according to claim 11 or 12, wherein the radio frame comprises a user information field, and the user information field indicates the service.

16. The method according to claim 15, wherein the user information field comprises an application identifier subfield;
the application identifier subfield is used to carry the type information; and
at least one subfield other than the application identifier subfield in the user information field is used to carry the feature information.

17. The method according to any one of claims 11 to 16, wherein the service comprises at least one of the following:
sending of a beacon frame or synchronization of a timestamp.

18. The method according to any one of claims 12 to 17, wherein the feature information comprises at least one of the following:
timestamp information, sequence number information of an 802.11 protocol radio frame, or scrambling code information.

19. The method according to any one of claims 11 to 18, wherein the service is the sending of a beacon frame, and the initiating, by the second access point, the service based on the radio frame comprises:
sending, by the second access point, the beacon frame to a station, wherein
a time interval between a sending moment of the beacon frame and a receiving moment of the radio frame is a second time period.

20. The method according to claim 19, wherein the second time period is less than or equal to 16 microseconds.

21. A communication apparatus, comprising a communication interface and a processor, wherein the communication interface is configured to receive and send data and/or signaling, and the processor is configured to execute a computer program or instructions,
so that the communication apparatus performs the method according to any one of claims 1 to 20.

22. The apparatus according to claim 21, further comprising a memory, wherein the memory is configured to store the computer program or the instructions.

23. A communication system, comprising a first access point and a second access point, wherein
the first access point is configured to perform the method according to any one of claims 1 to 10; and
the second access point is configured to perform the method according to any one of claims 11 to 20.

24. A computer-readable storage medium, comprising a computer program or instructions, wherein when the computer program or the instructions are run on a computer, the method according to any one of claims 1 to 20 is performed.

25. A computer program product, comprising instructions, wherein when the instructions are run on a computer, the method according to any one of claims 1 to 20 is performed.
